# EUROPÄISCHE PATENTSCHRIFT

(11) **EP 0 824 683 B1**
(45) Veröffentlichungstag und Bekanntmachung des Hinweises auf die Patenterteilung: **02.01.2003**
(21) Anmeldenummer: 96914974.9
(22) Anmeldetag: 22.04.1996
(51) Int. Cl.: G01N 21/47, G01N 21/88, B05B 12/00, B05C 11/02, B41F 23/06

(54) **GERÄT ZUR BESTIMMUNG DER PUDERDICHTE AUF EINEM BESTÄUBTEN DRUCKERZEUGNIS**
APPARATUS FOR DETERMINING THE POWDER DENSITY ON A DUSTY PRINTED ARTICLE
APPAREIL POUR LA DETERMINATION DE LA DENSITE D'UNE POUDRE SUR UN PRODUIT IMPRIME SAUPOUDRE

(30) Priorität: 07.05.1995 DE 19516188
(43) Veröffentlichungstag der Anmeldung: 25.02.1998
(73) Patentinhaber: Platsch GmbH & Co. KG, 70565 Stuttgart (DE); Platsch, Hans G., 70565 Stuttgart (DE)
(72) Erfinder: PLATSCH, Hans, D-70565 Stuttgart (DE); KIESSLING, Albert, D-71263 Weil der Stadt (DE); HERING, Guido, D-75233 Tiefenbronn (DE)
(74) Vertreter: Ostertag, Ulrich, Dr.
(86) Internationale Anmeldenummer: EP9601680
(87) Internationale Veröffentlichungsnummer: WO96035939

(56) Entgegenhaltungen:
- EP-A- 0 257 749
- US-A- 5 276 481
- US-A- 5 317 380

## Beschreibung

Die Erfindung betrifft ein Gerät zur Bestimmung der Puderdichte auf einem bestäubten Druckerzeugnis gemäß dem Oberbegriff des Anspruches 1.

Ein derartiges Meßgerät ist in der US 5 317 380 A offenbart.

Dort wird zur Prüfung von Halbleiterwafern vorgeschlagen, die Waferoberfläche unter geringem Einfallswinkel unter Verwendung eines Drehspiegels mit einem Laserstrahl linienweise abzutasten und das gestreute Licht zu messen, welches ein Maß für auf der Oberfläche befindliche Verunreinigungen ist. Durch Verfahren des Wafers wird sukzessive die Waferoberfläche abgescannt.

Durch die vorliegende Erfindung soll ein derartiges Meßgerät so weitergebildet werden, daß eine noch bessere Erkennung von einzelnen auf einem bedruckten Druckerzeugnis befindlichen Puderpartikel gewährleistet ist.

Diese Aufgabe ist erfindungsgemäß gelöst durch ein Meßgerät mit den im Anspruch 1 angegebenen Merkmalen.

Für eine entsprechende Kontrastverschärfung wird vorgeschlagen, beim bildseitigen Brennpunkt der einen Bereich der Oberfläche des Druckerzeugnisses auf den Bildwandler abbildenden Optik einen Blendenkörper anzuordnen. Da die Achse der Optik unter einem Winkel zur Oberfläche des Druckerzeugnisses angestellt ist, der vom Reflexionswinkel des Meßlichtbündels verschieden ist, erhält man auf diese Weise eine nochmals verbesserte Unterdrückung von nicht von Puderpartikeln zurückgeworfenem Licht.

Durch die angegebene Auswertung der Bildsignale des Bildwandlers erhält man auf einfache Weise zugleich eine elektronische Kontrastanhebung für die Herstellung des Bildes der auf der Oberfläche des Druckerzeugnisses befindlichen Puderpartikel.

Vorteilhafte Weiterbildungen der Erfindung sind in Unteransprüchen angegeben.

Bei den Meßgeräten nach Anspruch 2 und 3 ist die Form der im Blendenkörper vorgesehenen Durchbrechung an die Geometrie des jeweils verwendeten Bildwandlers angepaßt.

Bei einem Meßgerät gemäß Anspruch 4 kann man auf einfache Weise das Druckerzeugnis zuverlässig ausmessen.

Dabei kann man mit der Weiterbildung gemäß Anspruch 5 die Puderdichtemessung zuverlässig auch auf den gesamten Bereich des Druckerzeugnisses ausdehnen, und so nicht nur in einer Richtung messen, die transversal zu derjenigen Richtung verläuft, in welcher das Druckerzeugnis durch das Bestäubungsgerät hindurch geführt wird, sondern auch in der Förderrichtung selbst. Man kann so nicht nur feststellen, ob einige der quer zur Förderrichtung des Druckerzeugnisses angeordneten Düsen des Puderbestäubungsgerätes ungleiche Pudermengen abgeben, sondern auch feststellen, ob die verschiedenen Puderabgabedüsen konstant, also ohne zeitliche Schwankungen arbeiten.

Die Weiterbildung der Erfindung gemäß Anspruch 6 gestattet die Realisierung eines Meßgerätes ausgehend von preisgünstig auf dem Markt erhältlichen Grundkomponenten, die nur geringfügig abgewandelt zu werden brauchen.

Die Weiterbildung der Erfindung gemäß Anspruch 7 ist im Hinblick auf eine nochmalige Verbesserung des Kontrastes bei der Darstellung der Puderpartikel von Vorteil.

Die Weiterbildung der Erfindung gemäß Anspruch 8 gestattet ein streifendes Beleuchten der Oberfläche des Druckerzeugnisses bei kompakten Abmessungen von Meßkopf und Beleuchtungseinheit.

Auch die Weiterbildung der Erfindung gemäß Anspruch 9 dient der Erhöhung des Kontrastes bei der Erzeugung des Puderpartikelbildes, da Reflexionen von Meßlicht an der Unterseite der Gehäuse von Meßkopf und Beleuchtungseinheit ausgeräumt sind.

Gemäß Anspruch 10 läßt sich der Umbau eines handelsüblichen Scanners in ein Puderdichte-Meßgerät mit einfachen Mitteln und ohne gravierenden Eingriff in den Scanner realisieren.

Mit der Weiterbildung der Erfindung gemäß Anspruch 11 wird dabei erreicht, daß das Eintrittsfenster des Scanners etwas von der Oberfläche des Druckerzeugnisses abgehoben wird, so daß beim Bewegen des Scanners die Puderpartikelverteilung nicht geändert wird. Zugleich wird zwischen der Unterseite des Scannergehäuses und der Oberfläche des Druckerzeugnisses ein kleiner spaltförmiger Raum geschaffen, über welchen das Meßlichtbündel zugeführt wird.

Den Vorteil einer Kontrastverbesserung erhält man gemäß Anspruch 12 auch für die Darstellung von Oberflächenrauhigkeiten auf einer Druckunterlage.

Die Weiterbildung der Erfindung gemäß Anspruch 13 gestattet es, für die Bestimmung der Oberflächenrauhigkeiten bezüglich Anzahl und Größe dieselbe Software einzusetzen wie für die Bestimmmung der Puderdichte und der Größe der verschiedenen Puderpartikel.

Die Weiterbildungen der Erfindung gemäß den Ansprüchen 14 bis 16 sind im Hinblick auf besonders einfache Bestimmung der Anzahl und Größe von auf der Oberfläche des Druckerzeugnisses bzw. der Druckunterlage festgestellten Objekten (Puderpartikel bzw. Rauhigkeiten) von Vorteil.

Bei einem Meßgerät gemäß Anspruch 17 und 18 erhält man automatisch eine Information des Bedienungspersonales, wenn die Puderdichte entweder soweit absinkt, daß ein zuverlässiges Trennen übereinanderliegender Druckerzeugnisse nicht mehr gewährleistet ist, oder lokal so stark ansteigt, daß ein Verschmutzen der Druckmaschine durch überschüssigen Puder zu befürchten ist.

Bei einem Meßgerät gemäß Anspruch 19 erhält der Benutzer nach Ausmessung der Oberflächenrauhigkeit einer Druckunterlage einen Vorschlag, welche Art von Puder in welcher Menge zum zuverlässigen Trennen übereinanderliegender bedruckter Druckbogen zu verwenden ist.

Bei einem Meßgerät gemäß Anspruch 20 kann man den Einfallswinkel des Meßlichtbündels variieren, und so für die Messung der Puderdichte und die Meßung der Oberflächenrauhigkeiten die jeweils günstigsten Bedingungen einstellen. Für die Messung der Puderdichte ist ein möglichst streifender Einfall des Meßlichtbündels von Vorteil, während bei der Bestimmung der Anzahl und Abmessung von Oberlächenrauhigkeiten eine geringfügig stärkere Anstellung der Achse des Meßlichtbündels vorteilhaft ist.

Nachstehend wird die Erfindung anhand von Ausführungsbeispielen unter Bezugnahme auf die Zeichnung näher erläutert. In dieser zeigen:
- Figur 1:: eine schematische Aufsicht auf ein Meßgerät zur Bestimmung der Puderdichte auf einem bedruckten Druckerzeugnis und zur Bestimmung der Oberflächenrauhigkeit einer zu bedruckenden Druckunterlage;
- Figur 2:: einen vertikalen mittigen Schnitt durch eine Beleuchtungseinheit und einen Meßkopf des in Figur 1 gezeigten Meßgerätes sowie durch die darunterliegenden Abschnitte eines bestäubten Druckerzeugnisses und eines Vorlagentisches des Meßgerätes nach Figur 1;
- Figur 3:: eine vergrößerte Ansicht eines Teiles der Oberfläche des bestäubten Druckerzeugnisses wie es durch Darstellung der Pixel eines Bildwandlers des in Figur 2 gezeigten Meßkopfes auf einem Monitor erhalten wird;
- Figur 4:: eine nochmals vergrößerte Ansicht eines Ausschnittes des vom Bildwandler erzeugten Bildes eines Puderteilchens, welche zur Erläuterung eines Programmabschnittes verwendet wird, der zur Bestimmung der Anzahl und Größe von Puderpartikeln dient;
- Figur 5:: ein Flußdiagramm, in welchem die wichtigsten Abschnitte eines Programmes zum Bestimmen der Anzahl und Größe von Puderpartikeln wiedergegeben sind; und
- Figur 6:: einen vertikalen Schnitt durch eine abgewandelte Beleuchtungseinheit und einen abgewandelten Meßkopf, welche durch Umbau eines handelsüblichen handgeführten Scanners erhalten sind.

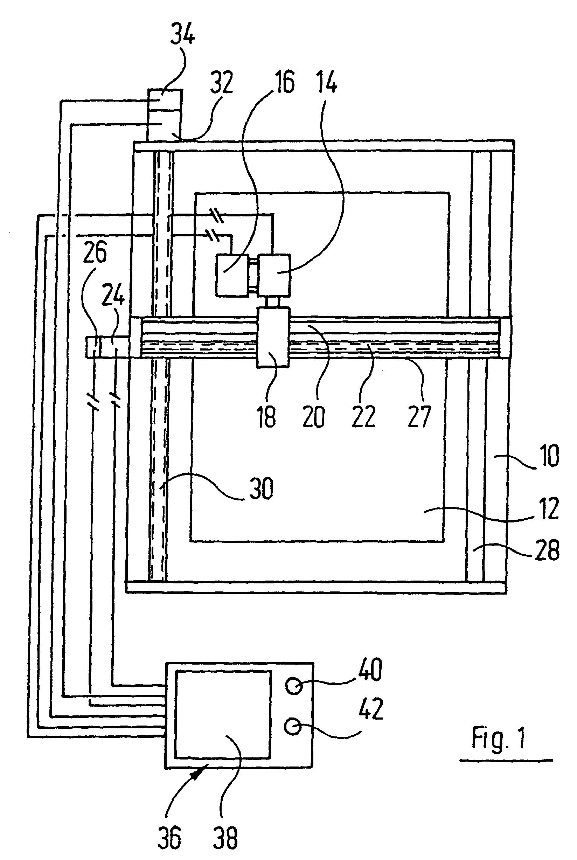

In Figur 1 ist mit 10 ein Meßtisch bezeichnet, auf welchem ein bogenförmiges bedrucktes Druckerzeugnis 12 liegt. Dieses ist nach dem Bedrucken mit einer dünnen Puderschicht bestäubt worden, welche das Zusammenkleben von Druckerzeugnissen in einem Stapel verhindert. Um messen zu können, ob die Puderdichte überall ausreichend, andererseits aber auch nicht unnötig groß ist, ist über dem Druckerzeugnis ein insgesamt mit 14 bezeichneter optischer Meßkopf vorgesehen, der seinerseits eine Beleuchtungseinheit 16 trägt.

Der Meßkopf 14 ist an einem Schlitten 18 befestigt, der auf einer Führungsstange 20 läuft und durch eine Gewindespindel 22 angetrieben wird. Letztere wird durch einen Motor 24 gedreht, der mit einem Drehmelder 26 gekoppelt ist.

Ein die Führungsstange 20 und die Gewindespindel 22 tragender Schlitten 27 läuft seinerseits auf einer Führungsstange 28 und wird durch eine Gewindespindel 30 bewegt, die durch einen Motor 32 angetrieben ist. Letzterem ist ein Drehmelder 34 zugeordnet.

Eine insgesamt mit 36 bezeichnete Steuer- und Auswerteeinheit dient zur Auswertung der von einem Bildwandler des Meßkopfes 14 erzeugten Teilbilder der Oberfläche des Druckerzeugnisses 12 sowie zur Energieversorgung der Beleuchtungseinheit 16 und zum Ansteuern der Motoren 24 und 32 sowie zur Messung der Stellung der beiden Schlitten 18 und 27. In den sich zwischen der Steuer- und Auswerteeinheit 36 und den angeschlossenen Einheiten erstreckenden Leitungen sind flexible und/oder längenveränderliche Leitungsabschnitte durch Unterbrechungen angedeutet.

Die Steuer- und Auswerteeinheit 36 bewegt über die Motoren 24 und 32 die durch den Meßkopf 14 und die Beleuchtungseinheit gebildete Einheit schrittweise über die Druckvorlage, wobei die Schrittgrößen in horizontaler bzw, vertikaler Richtung durch die Kantenlängen des Bildfeldes des Meßkopfes 14 vorgegeben sind. Ferner wertet die Steuer- und Auswerteeinheit 36 die Ausgangssignale eines Bildwandlers des Meßkopfes 14 aus, wie später noch genauer beschrieben wird.

Die Steuer- und Auswerteeinheit 36 hat einen Anzeige 38, die z. B. durch ein LCD-Feld gebildet sein kann. Bedienungsknöpfe 40, 42 dienen dazu, Grund-Arbeitsweisen der Steuer- und Auswerteeinheit 36 vorzugeben, insbesondere von der oben schon angsprochenen Messung der Dichte von Puderpartikeln umzuschalten auf eine Arbeitsweise, in welcher die Rauhigkeit einer nicht bedruckten Druckunterlage ermittelt wird.

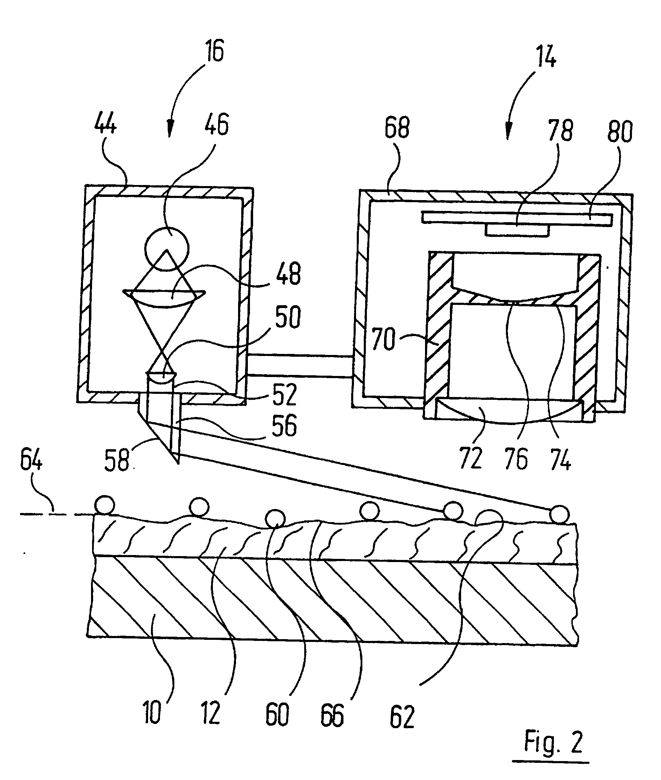

Wie aus Figur 2 ersichtlich, hat die Beleuchtungseinheit 16 ein Gehäuse 44, in welchem eine Lichtquelle 46 angeordnet ist. Für die Zwecke der Erläuterung sei angenommen, daß die Lichtquelle 46 eine kleine Halogenlampe ist, welche einer Punktlichtquelle nahekommt.

Die Lichtquelle 46 wird durch eine Linse 48 in den Brennpunkt einer kleinen kurzbrennweitigen Linse 50 abgebildet, welche so ein paralleles Meßlichtbündel 52 mit kleinem Querschnitt herstellt. Letzteres läuft dann in einen tranparenten Prismenkörper 56, der am unteren Ende mit einer verspiegelten Umlenkfläche 58 versehen ist. Auf diese Weise erhält man ein unter kleinem Winkel zur Oberfläche des Druckerzeugnisses auf letzteres auffallendes Meßlichtbündel. Der Einfallswinkel kann in der Praxis zwischen 2 und 10^{o} betragen.

Wie ebenfalls aus Figur 2 ersichtlich, sind auf der Obexfläche des Druckerzeugnisses 12 Puderpartikel 60 angeordnet. Außerdem weist die Oberfläche des Druckerzeugnisses selbst Vertiefungen 62 auf, die von einer durch eine gestrichelte Linie 64 angedeuteten Ideal-Oberfläche des Druckerzeugnisses 12 zurückspringen, ferner kleine Erhöhungen 66, die über diese Oberfläche überstehen.

Der Meßkopf 14 hat ein Gehäuse 68, in dessen untenliegende Wand ein hülsenförmiges Linsen-Halteteil 70 eingesetzt ist, das bei seinem unteren Ende eine Linse 72 trägt. In einem transversalen angeformten Blendenkörper 74 des Halteteiles 70 ist eine kleine kreisförmige Durchbrechung 76 vorgesehen. Der Abstand der Durchbrechung 76 von der Hauptebene der Linse 72 entspricht der Brennweite dieser Linse oder liegt in der Nähe derselben. Oberhalb des Halteteiles 70 ist ein Bildwandler 78 angeordnet, der von einer gedruckten Leiterplatte 80 getragen wird. Der Bildwandler 78 und die Leiterplatte 80 sowie die von dieser getragenen Komponenten entsprechen den funktionsgleichen Teilen einer handelsüblichen Fernsehkamera.

Wie aus Figur 2 ersichtlich, steht die optische Achse des Meßkopfes 14 senkrecht auf der Oberfläche des Druckerzeugnisses 12, und wäre diese Oberfläche frei von Puderpartikeln 60 und ideal eben und glatt, würden keine Anteile des Meßlichtbündels 52 auf den Bildwandler 78 gelangen. Die auf der Oberfläche des Druckerzeugnisses befindlichen Puderpartikel 60 streuen aber Anteile des Meßlichtbündels 52, so daß die Linse 72 auf dem Bildwandler 78 ein Bild der Puderpartikel 60 erzeugt. Gleiches gilt in vermindertem Ausmaße für die Vertiefungen 62 und Erhöhungen 66. Je stärker streifend der Einfall des Meßlichtbündels 52 auf die Oberfläche des Druckerzeugnisses 12 erfolgt, um so geringer ist der Beitrag der Vertiefungen 62 und der Erhöhungen 66 zu dem auf dem Bildwandler 78 erhaltenen Bild. Bei nur sehr kleiner Anstellung des Meßlichtbündels 52 besteht dieses Bild praktisch ausschließlich aus dem Bild der Puderpartikel.

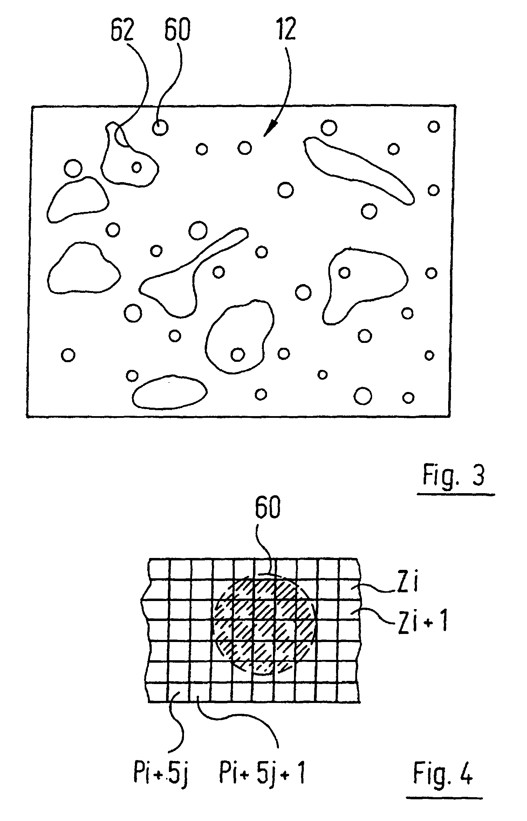

In Figur 3 ist schematisch ein Bild dargestellt, wie es vom Bildwandler 78 bei nicht extrem streifendem Einfall erhalten wird. Man erkennt Puderpartikel 60 unterschiedlicher Größe, die statistisch über die Bildfläche verteilt sind, sowie Vertiefungen 62. Die Puderpartikel 60 erscheinen als helle kreisförmige Scheiben, die Vertiefungen 62 als dunklere unregelmäßige Flächen.

Wie in Figur 4 dargestellt, ist das Bild des Bildwandlers 78 in aufeinanderfolgenden Zeilen Z1, Z2, Zi, Zi+1, ... organisiert, welche jeweils eine Aufeinanderfolge von Pixeln Pi1, Pi2, Pi3, ..., Pij, Pij+1, ... aufweisen.

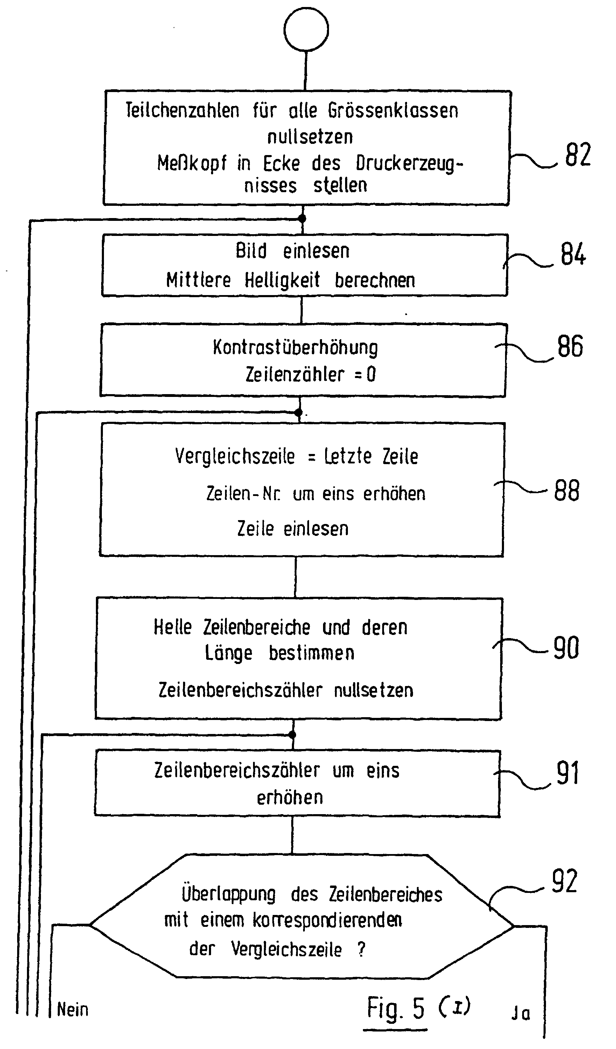

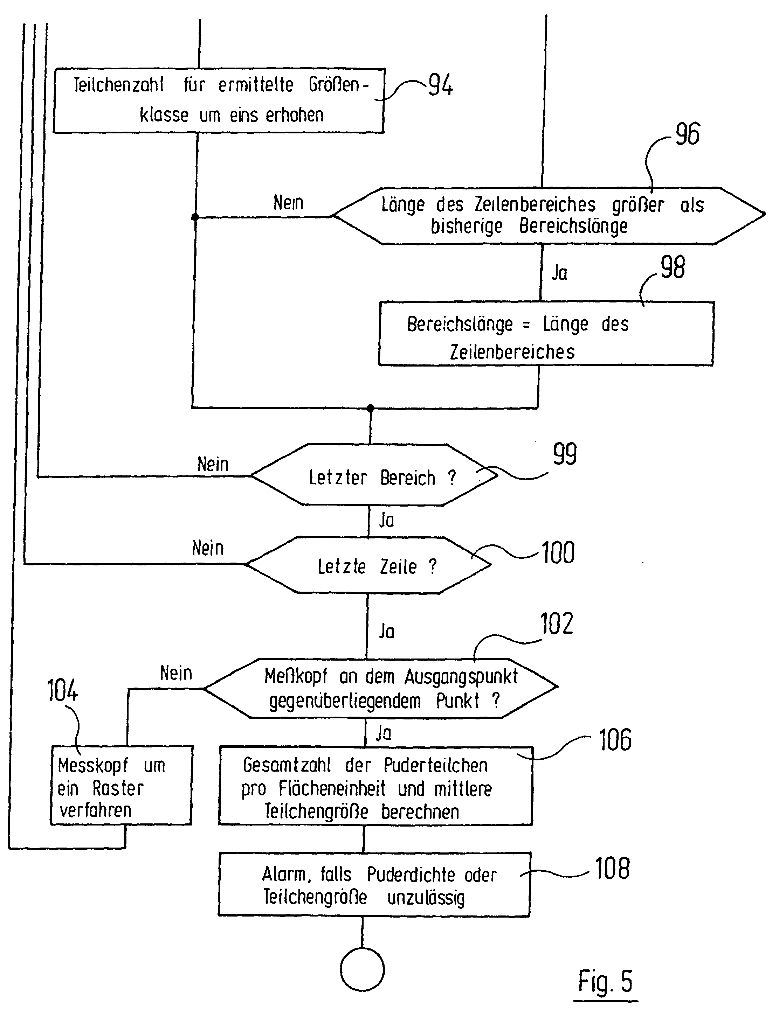

Figur 5 zeigt, wie man aus dem vom Bildwandler 78 erhaltenen Bild die Puderdichte und die Größenverteilung der Puderpartikel ermitteln kann. Die Bildauswertung erfolgt zeilenweise.

In einem Initialisierungsblock 82 werden zunächst die Teilchenzahlen in den verschiedenen Größenklassen auf Null gesetzt und der Meßkopf 14 in eine bei einer Blattecke liegende Ausgangsstellung bewegt.

In einem weiteren Block 84 wird das jeweils vorliegende Bild des Bildwandlers eingelesen und durch Summieren der Helligkeitswerte für alle Pixel und Division durch die Gesamtzahl der Pixel wird die mittlere Bildhelligkeit berechnet.

In einem weiteren Block 86 wird dadurch ein Puderbild erzeugt, daß alle Bildpixel, deren Helligkeit größer ist als der Mittelwert, auf hell gesetzt werden, alle anderen Bildpixel auf dunkel gesetzt werden. Ferner wird ein Zeilenzähler auf null gesetzt.

In einem weiteren Block 88 wird die zuletzt ausgewertete Zeile als Vergleichszeile gespeichert, der Zeilenzähler um eins erhöht, und die nächste Zeile eingelesen.

In einem anschließenden Programmblock 90 werden die hellen Zeilenbereiche und deren Länge bestimmt. Ferner wird ein Zeilenbereichszähler auf null gesetzt.

In einem nächsten Programmblock 91 wird der Zeilenbereichszähler um eins erhöht.

In einer sich anschließenden Verzweigung 92 wird anhand der Vergleichszeile geprüft, ob ein heller Zeilenbereich verschwunden ist. Ist dies der Fall, wird in einem Programmblock 94 die Teilchenzahl in der dem zuvor ermittelten Durchmesser entsprechenden Teilchenklasse um eins erhöht.

Wurde in der Verzweigung 92 festgestellt, daß der betrachtete Bildbereich eine Fortsetzung eines Bildbereiches der vorhergehenden Zeile ist, so wird in einer Verzweigung 96 geprüft, ob die Abmessung des entsprechenden Bildbereiches zugenommen hat oder nicht. Ist dies der Fall, wird in einem Programmblock 98 der Objektdurchmesser aktualisiert.

In einer weiteren Verzweigung 99 wird geprüft, ob der letzte Bildbereich der Zeile schon erreicht ist. Ist dies nicht der Fall, erfolgt ein Rücksprung zum Programmblock 91.

In einer weiteren Verzweigung 100 wird geprüft, ob die letzte Zeile des Bildes schon erreicht ist. Ist dies nicht der Fall, erfolgt ein Rücksprung zum Programmblock 88.

In einer weiteren Verzweigung 102 wird geprüft, ob schon die dem Ausgangspunkt gegenüberliegende Ecke des Druckerzeugnisses erreicht ist. Ist dies nicht der Fall, werden in einem Programmblock 104 die Motoren 24 und 32 so angesteuert, daß der Meßkopf 14 um ein Raster auf einem mäanderförmigen Weg weiterbewegt ist, der von der Ausgangsecke des Druckerzeugnisses 12 zur gegenüberliegenden Ecke führt, oder allgemeiner vom Messungs-Ausgangspunkt zum Messungs-Endpunkt führt.

Wird in der Verzweigung 102 festgestellt, daß die dem Ausgangspunkt gegenüberliegende Ecke des Druckerzeugnisses schon erreicht ist, wird in einem weiteren Programmblock 106 die mittlere Teilchendichte und mittlere Teilchengröße berechnet. In einem weiteren Programmblock 108 wird geprüft, ob Teilchendichte und Teilchengröße innerhalb eines vorgegebenen Fensters liegen. Ist dies nicht Fall, erfolgt ein Alarm, z. B. durch Ausgabe einer alphanumerischen Nachricht auf dem Bildschirm der Steuer- und Auswerteeinheit 36.

In Abwandlung des oben beschriebenen Ausführungsbeispieles kann man auch den Schlitten 27 feststehend vorsehen und den Meßkopf 14 nur transversal über das Druckerzeugnis 12 bewegen, so daß man nur das transversale Puderdichte-Profil ausmißt. Es versteht sich, daß das Flurdiagramm gemäß Figur 5 dann entsprechend vereinfacht werden kann.

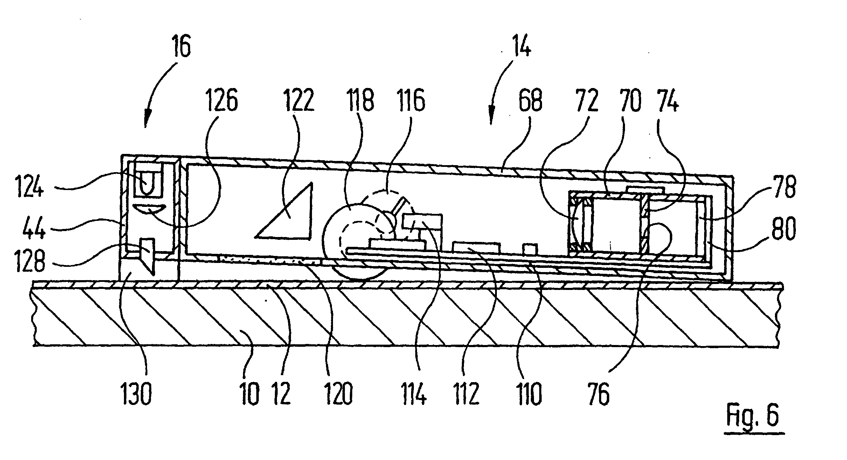

In Figur 6 ist ein abgewandelter Meßkopf 14 wiedergegeben, dessen Aufbau weitgehend dem eines handgeführten Scanners entspricht, wie er zum Einlesen von Texten und Graphiken in einen PC verwendet wird. Teile des Scanners, welche funktionsmäßig Teilen des in Figur 2 gezeigten Meßkopfes 14 entsprechen, sind wieder mit denselben Bezugszeichen versehen.

Das Halteteil 70 ist als rechteckigen Querschnitt ausweisendes Gehäuse ausgebildet, an dessen Hinterseite direkt der Bildwandler 78 und die ihn tragende Leiterplatte 80 angebaut sind. Die Linsenhalterung ist auf einer weiteren Leiterplatte 110 angeordnet, welche mit verschiedenen elektronischen Komponenten 112 bestückt ist, darunter eine Gabellichtschranke 114. Diese arbeitet mit einer Stroboskopscheibe 116 zusammen, die durch ein Reibrad 118 angetrieben wird, welches mit der Oberfläche des Druckerzeugnisses 12 zusammenarbeitet. Die Abbildung der Oberfläche des Druckerzeugnisses 12 erfolgt über ein in der unteren Wand des Gehäuses 68 vorgesehenes Fenster 120 sowie ein dreieckigen Querschnitt aufweisendes leistenförmiges Umlenkprisma 122, dessen schräge Prismenseite verspiegelt ist.

Auf die in Figur 6 links gelegene Stirnfläche des Gehäuses 68 ist die Beleuchtungseinheit 16 montiert. Diese umfaßt eine Diodenzeile 124, die eine Mehrzahl senkrecht zur Zeichenebene von Figur 6 aufeinanderfolgender Dioden umfaßt. Die Diodenzeile 124 wird über eine Zylinderlinse 126 auf eine Prismenleiste 128 abgebildet, die am unteren Ende eine im wesentlichen unter 45° angestellte verspiegelte Prismenfläche aufweist.

Wie aus Figur 6 ersichtlich, sind bei den beiden Seiten des Gehäuses 44 der Beleuchtungseinheit 16 zwei schmale Gleitrippen 130 vorgesehen, welche über die Gehäuseunterseite nach unten überstehen. Auf diese Weise ergibt sich zwischen der Unterseite des Gehäuses 44 und der hiermit fluchtenden Unterseite des Gehäuses 68 sowie der Oberseite des Druckerzeugnisses 12 ein keilförmiger Spalt, in dessen links gelegenes Ende das untere Ende der Prismenleiste 128 hineinragt. Durch diesen keilförmigen Spalt hindurch wird Licht im wesentlichen streifend gegen die Oberfläche des Druckerzeugnisses 12 gerichtet.

Um Reflexionen von Randstrahlen auszuschalten, sind die untenliegenden Flächen der Gehäuse 44 und 68 schwarz gefärbt.

Der Meßkopf 14 unterscheidet sich von einem handelsüblichen handgeführten Scanner nur in folgendem:

Die dort zur Beleuchtung der Vorlage dienende Diodenleiste ist ausgebaut und zusammen mit der zugeordneten Linsenleiste in dem Gehäuse 44 der Beleuchtungseinheit 16 untergebracht. Ferner ist das zum Antrieb der Stroboskopscheibe vorgesehene Reibrad durch ein Reibrad ersetzt, welches gemäß der Höhe der Gleitrippen 130 vergrößerten Durchmesser aufweist. Schließlich ist in die obere Wand des Gehäuses oder Halteteiles 70 eingebohrt worden, durch welche der Blendenkörper 74 eingeführt ist. Dessen Durchbrechung 76 ist im Hinblick darauf, daß der Bildwandler 78 nun nur eine Pixelzeile umfaßt, als Spalt ausgebildet, wobei die lange Spaltachse in der Zeichenebene liegt und senkrecht auf der Achse des Bildwandlers steht, während die kurze Spaltachse senkrecht auf der Zeichenebene steht und parallel zur Wandlerachse verläuft.

Beim Einsatz wird der handgeführte Scanner einfach quer über ein zu prüfendes bestäubendes Druckerzeugnis geführt, und die vom Zeilen-Bildwandler 78 abgegebenen Signale werden in einem Schreib-/Lesespeicher der Steuer- und Auswerteeinheit 36 abgelegt, was unter Adressierung der einzelnen Speicherzellen in Abhängigkeit vom Stand eines Zählers erfolgt, der gemäß den Ausgangsimpulsen der Gabellichtschranke 114 nach oben zählt. Man erhält so im Schreib-/Lesespeicher ein Bild eines quer über das Druckerzeugnis verlaufenden Bereiches der Puderschicht. Dieses Bild kann ähnlich ausgewertet werden, wie oben beschrieben.

Es versteht sich, daß man das in Figur 6 gezeigte Meßgerät gleichermaßen auch zur Messung der Oberflächenrauhigkeit einer zu bedruckenden Druckunterlage verwenden kann, wie obenstehend unter Bezugnahme auf das Meßgerät nach Figur 1 im einzelnen beschrieben.

In Abwandlung der oben erläuterten Ausführungsbeispiele kann man den Winkel, unter welchem das Meßlichtbündel auf die Oberfläche des Druckerzeugnisses auffällt, auch einstellbar machen, z. B. dadurch, daß man die Linse 50 oder die Linsenleiste 126 verkippt oder in seitlicher Richtung auslenkt. In diesem Falle kann man dann einen etwas vergrößerten Winkel zwischen Meßlichtbündel und Oberfläche des Druckerzeugnisses bei der Rauhigkeitsmessung verwenden, während man für die Bestimmung der Puderdichte wieder mit möglichst streifendem Lichteinfall arbeitet.

## Patentansprüche

1. Gerät zur Bestimmung der Puderdichte auf einem bestäubten Druckerzeugnis (12) mit einer Beleuchtungseinheit (16), welche schräg zur Oberfläche des Druckerzeugnisses (12) gerichtetes Meßlicht erzeugt, und mit einer Meßeinrichtung (14), welche aufweist: eine Optik (72), deren Achse unter einem Winkel zur Oberfläche des Druckerzeugnisses (12) angestellt ist, welcher sich betragsmäßig vom Anstellwinkel des Meßlichts unterscheidet, einen lichtempfindlichen Sensor (78), welcher über die Optik (72) vom Druckerzeugnis (12) gestreutes Licht empfängt, eine Auswerteeinheit (36) zum Bestimmen zumindest der Anzahl der über den lichtempfindlichen Sensor (78) erfaßten Objekte (60, 62, 66), welche sich auf der Oberfläche des Druckerzeugnisses (12) befinden, und einer im Bereich des bildseitigen Brennpunktes der Optik (72) angeordneten Blendenanordnung, wobei das Meßlicht ein Meßlichtbündel (52) ist, wobei die Blendenanordnung einen einzigen ringförmigen Blendenkörper (74) umfaßt, und wobei der lichtempfindliche Sensor durch einen in der Bildebene der Optik (72) angeordneten Bildwandler (78) gebildet ist, **dadurch gekennzeichnet, daß** die Auswerteeinheit (36) aus einem vom Bildwandler (78) ausgelesenen Bild dadurch ein Bild von auf der Oberfläche des Druckerzeugnisses (12) befindlichen Puderpartikeln (60) erzeugt, daß sie für das ganze Bild die mittlere Helligkeit aller Pixel des vom Bildwandler (78) ausgelesenen Bildes berechnet und für das Puderbild diejenigen Pixel verwendet, bei denen die Helligkeit größer ist als die mittlere Helligkeit.

2. Gerät nach Anspruch 1, **dadurch gekennzeichnet, daß** der Bildwandler (78) ein eine zweidimensionale Pixelanordnung umfassender Bildwandler ist und der Blendenkörper (74) eine kreisförmige Durchbrechung (76) aufweist.

3. Gerät nach Anspruch 1, **dadurch gekennzeichnet, daß** der Bildwandler (78) ein eine eindimensionale Pixelanordnung umfassender Bildwandler ist und der Blendenkörper (74) eine spaltförmige Durchbrechung aufweist, wobei die Spalteachse senkrecht zur Achse der Pixelzeile des Bildwandlers (78) verläuft.

4. Gerät nach einem der Ansprüche 1 bis 3, **gekennzeichnet durch** mindestens einen Servoantrieb (24, 32) zum Verfahren des Meßkopfes (14) und der Beleuchtungseinheit (16) über dem Druckerzeugnis (12).

5. Gerät nach Anspruch 4, **gekennzeichnet durch** eine auf den Servoantrieb (24, 32) arbeitende Steuereinheit (36), welche die Servoantriebe (24, 32) so steuert, daß der Meßkopf (14) und die Beleuchtungseinheit (16) intermittierend um der Größe eines Bildfeldes entsprechende Strecken bewegt werden.

6. Gerät nach einem der Ansprüche 1 bis 5, **dadurch gekennzeichnet, daß** der Meßkopf (14) durch einen im wesentlichen handelsüblichen Scanner gebildet ist, welcher zwischen seiner Optik (72) und dem Bildwandler (78) zusätzlich mit dem Blendenkörper (74) versehen ist und bei dem die Optik (72) und/oder die Beleuchtungseinheit (16) so versetzt worden sind, daß ihre Achsen nicht der Reflexionsbedingung entsprechen.

7. Meßgerät nach einem der Ansprüche 1 bis 6, **dadurch gekennzeichnet, daß** die Beleuchtungseinheit (16) ein unter kleinem Winkel von etwa 2^{o} bis etwa 10^{o} zur Oberfläche des Druckerzeugnisses (12) geneigtes, streifend auf das Druckerzeugnis auffallendes Meßlichtbündel (52) erzeugt und die Achse der Optik (72) im wesentlichen senkrecht auf der Oberfläche des Druckerzeugnisses (12) steht.

8. Gerät nach Anspruch 7, **dadurch gekennzeichnet, daß** die Beleuchtungseinheit (16) einen der Oberfläche des Druckerzeugnisses (12) benachbarten Umlenkspiegel (58) umfaßt.

9. Gerät nach einem der Ansprüche 1 bis 8, **dadurch gekennzeichnet, daß** die der Oberfläche des Druckerzeugnisses (12) zugewandten Gehäuseflächen des Meßkopfes (14) und der Beleuchtungseinheit (16) als das Meßlicht absorbierende Flächen ausgebildet sind.

10. Gerät nach einem der Ansprüche 6 bis 9, **dadurch gekennzeichnet, daß** die Beleuchtungseinheit (16) ein auf das Gehäuse (68) des Scanners aufgesetztes Zusatzgehäuse (44) aufweist.

11. Gerät nach Anspruch 10, **dadurch gekennzeichnet, daß** der Scanner ein von Hand geführter Scanner ist und das Zusatzgehäuse (44) über die Unterseite des Scannergehäuse nach unten herabhängende Gleitrippen (130) aufweist.

12. Gerät nach einem der Ansprüche 1 bis 11, **dadurch gekennzeichnet, daß** die Auswerteeinheit (36) aus dem vom Bildwandler (78) ausgelesenen Bild dadurch ein Bild von Oberflächenrauhigkeiten erzeugt, daß sie für das ganze Bild oder eine Bildzeile die mittlere Helligkeit aller Pixel berechnet und für das Rauhigkeitenbild solche Bildpixel verwendet, bei denen die Helligkeit kleiner ist als die mittlere Helligkeit.

13. Gerät nach Anspruch 12, **dadurch gekennzeichnet, daß** die Auswerteeinheit (36) die dunklen Bereiche und die hellen Bereiche des Rauhigkeitsbildes vertauscht.

14. Gerät nach einem der Ansprüche 11 bis 13, **dadurch gekennzeichnet, daß** die Auswerteeinheit (36) für jede Zeile des Bildes helle Bildbereiche und dunkle Bildbereiche sowie deren Länge bestimmt.

15. Gerät nach Anspruch 14, **dadurch gekennzeichnet, daß** die Auswerteinheit (36) ermittelt, ob sich die hellen Bildbereiche aufeinanderfolgender Bildzeilen überlappen und einen Partikelzähler jeweils um eins erhöht, wenn in der vorhergehenden Bildzeile ein Bildbereich festgestellt wurde, der in der aktuellen Bildzeile nicht mehr vorliegt.

16. Gerät nach Anspruch 14 oder 15, **dadurch gekennzeichnet, daß** die Auswerteinheit (36) für jeden festgestellten Bildbereich eine Bereichsgrößenvariable dann gleich der in der vorliegenden Bildzeile festgestellten Bildbereichslänge setzt, wenn letztere größer ist, als die Bereichsgrößen variable.

17. Gerät nach einem der Ansprüche 1 bis 16, **dadurch gekennzeichnet, daß** die Auswerteeinheit (36) ein Alarmsignal (108) erzeugt, wenn die Puderdichte in einem Bereich der Oberfläche des Druckerzeugnisses (12) unter einem vorgegebenen Mindestwert liegt.

18. Gerät nach einem der Ansprüche 1 bis 17, **dadurch gekennzeichnet, daß** die Auswerteeinheit (36) ein Alarmsignal (108) erzeugt, wenn die Puderdichte in einem Bereich der Oberfläche des Druckerzeugnisses (12) über einem vorgegebenen Maximalwert liegt.

19. Gerät nach einem der Ansprüche 1 bis 18, **dadurch gekennzeichnet, daß** die Auswerteeinheit (36) einen Festwertspeicher aufweist, in welchem für verschiedene Rauhigkeitswerte von Druckunterlagen Arbeitswerte für Partikelgröße und Puderdichte abgelegt sind und einen Satz dieser Arbeitsgrößen gemäß der jeweils gemessenen Rauhigkeit zur Anzeige bringt.

20. Gerät nach einem der Ansprüche 1 bis 19, **gekennzeichnet durch** eine Einrichtung zum Verstellen des Einfallswinkels des Meßlichtbündels.

## Claims

1. Device for determining the powder density on a dusted print product (12), with an illumination unit (16) which generates measurement light directed obliquely with respect to the surface of the print product (12), and with a measurement instrument (14) which has: an optical component (72) whose axis is inclined with respect to the surface of the print product (12) at an angle which differs in magnitude from the inclination angle of the measurement light, a photosensitive sensor (78) which receives light scattered by the print product (12) via the optical component (72), an evaluation unit (36) for determining at least the number of objects (60, 62, 66) recorded by means of the photosensitive sensor (78) which lie on the surface of the print product (12), and a diaphragm arrangement arranged in the vicinity of the image-side focal point of the optical component (72), the measurement light being a measurement-light beam (52), the diaphragm arrangement comprising a single annular diaphragm body (74), and the photosensitive sensor being formed by an image converter (78) arranged in the image plane of the optical component (72), **characterised in that** the evaluation unit (36) generates an image of powder particles (60) lying on the surface of the print product (12), using an image read out from the image converter (78), by its calculating for the entire image the average brightness of all the pixels of the image read out from the image converter (78), and by its using for the powder image those pixels at which the brightness is greater than the average brightness.

2. Device according to Claim 1, **characterised in that** the image converter (78) is an image converter comprising a two-dimensional pixel arrangement, and the diaphragm body (74) has a circular aperture (76).

3. Device according to Claim 1, **characterised in that** the image converter (78) is an image converter comprising a one-dimensional pixel arrangement, and the diaphragm body (74) has a columnar aperture, the column axis being perpendicular to the axis of the pixel line of the image converter (78).

4. Device according to one of Claims 1 to 3, **characterised by** at least one servo drive (24, 32) for moving the measurement head (14) and the illumination unit (16) over the print product (12).

5. Device according to Claim 4, **characterised by** a control unit (36) which operates on the servo drive (24, 34), and which controls the servo drives (24, 32) in such a way that the measurement head (14) and the illumination unit are moved intermittently by distances corresponding to the size of an image field.

6. Device according to one of Claims 1 to 5, **characterised in that** the measurement head (14) is formed by a substantially commercially available scanner which is additionally provided with the diaphragm body (74) between its optical component (72) and the image converter (78), and in which the optical component (72) and/or the illumination unit (16) have been offset in such a way that their axes do not correspond to the reflection condition.

7. Device according to one of Claims 1 to 6, **characterised in that** the illumination unit (16) generates a measurement-light beam (52) which is inclined at a small angle of about 2° to about 10° with respect to the surface of the print product (12), and which meets the print product at grazing incidence, and the axis of the optical component (72) is substantially perpendicular to the surface of the print product (12).

8. Device according to Claim 7, **characterised in that** the illumination unit (16) comprises a deviating mirror (58) next to the surface of the print product (12).

9. Device according to one of Claims 1 to 8, **characterised in that** those areas of the measurement head (14) and of the illumination unit (16) which face the surface of the print product (12) are designed as areas that absorb the measurement light.

10. Device according to one of Claims 6 to 9, **characterised in that** the illumination unit (16) has an auxiliary housing (44) fitted onto the housing (68) of the scanner.

11. Device according to Claim 10, **characterised in that** the scanner is a manually guided scanner, and the auxiliary housing (44) has slide ribs (130) hanging downwards beyond the underside of the scanner housing.

12. Device according to one of Claims 1 to 11, **characterised in that** the evaluation unit (36) generates an image of surface roughnesses, using an image read out from the image converter (78), by its calculating the average brightness of all the pixels for the entire image, or for an image line, and by its using for the roughness image such pixels at which the brightness is less than the average brightness.

13. Device according to Claim 12, **characterised in that** the evaluation unit (36) transposes the dark regions and the bright regions of the roughness image.

14. Device according to one of Claims 11 to 13, **characterised in that** the evaluation unit (36) determines bright image regions and dark image regions, as well as their length, for each line of the image.

15. Device according to Claim 14, **characterised in that** the evaluation unit (36) determines whether the bright image regionsof successive image lines overlap, and it respectively increments a particle counter by one when an image region was found in a preceding image line but is no longer present in the current image line.

16. Device according to Claim 14 or 15, **characterised in that**, for each image region which is found, the evaluation unit (36) sets a region-size variable equal to the image-region length found in the present image line whenever the latter is greater than the region size variable.

17. Device according to one of Claims 1 to 16, **characterised in that** the evaluation unit (36) generates an alarm signal (108) when the powder density in a region of the surface of the print product (12) lies below a predetermined minimum value.

18. Device according to one of Claims 1 to 17, **characterised in that** the evaluation unit (36) generates an alarm signal (108) when the powder density in a region of the surface of the print product (12) lies above a predetermined maximum value.

19. Device according to one of Claims 1 to 18, **characterised in that** the evaluation unit (36) has a read-only memory in which working values for particle size and powder density are saved for various roughness values of print articles, and it sends a set of these working quantities for display according to the respectively measured roughness.

20. Device according to one of Claims 1 to 19, **characterised by** an instrument for adjusting the angle of incidence of the measurement-light beam.

## Revendications

1. Appareil pour la détermination de la densité de poudre sur un produit imprimé saupoudré (12), avec une unité d'éclairage (16) qui produit une lumière de mesure dirigée en oblique vers la surface du produit imprimé (12), et avec un dispositif de mesure (14) qui présente : une optique (72), dont l'axe est incliné, par rapport à la surface du produit imprimé (12), sous un angle dont la valeur est différente de celle de l'angle d'inclinaison de la lumière de mesure ; un capteur photosensible (78), qui reçoit la lumière dispersée par le produit imprimé (12) et passant par l'optique (72); une unité d'évaluation (36) pour déterminer au moins le nombre d'objets (60, 62, 66), présents sur la surface du produit imprimé (12), détectés par le capteur photosensible (78) ; et un ensemble de diaphragme disposé dans la région du foyer côté image de l'optique (72), la lumière de mesure étant un faisceau de lumière de mesure (52), l'ensemble de diaphragme comprenant un unique corps de diaphragme annulaire (74) et le capteur photosensible étant formé par un convertisseur d'image (78) disposé dans le plan focal de l'optique (72), **caractérisé en ce que** l'unité d'évaluation (36) produit, à partir d'une image lue par le convertisseur d'image (78), une image des particules de poudre (60) présentes sur la surface du produit imprimé (12) par le fait qu'elle calcule pour la totalité de l'image la luminosité moyenne de l'ensemble des pixels de l'image lue par le convertisseur d'image (78) et qu'elle utilise pour l'image de la poudre les pixels dont la luminosité est supérieure à la luminosité moyenne.

2. Appareil selon la revendication 1, **caractérisé en ce que** le convertisseur d'image (78) est un convertisseur d'image comprenant un ensemble de pixels à deux dimensions et le corps de diaphragme (74) présente une ouverture circulaire (76).

3. Appareil selon la revendication 1, **caractérisé en ce que** le converkisseur d'image (78) est un convertisseur d'image comprenant un ensemble de pixels à une dimension et le corps de diaphragme (74) présente une ouverture en forme de fente, l'axe de la fente s'étendant perpendiculairement à l'axe des lignes de pixels du convertisseur d'image (78).

4. Appareil selon l'une quelconque des revendications 1 à 3, **caractérisé par** au moins un servo-entraînement (24, 32) pour déplacer la tête de mesure (14) et l'unité d'éclairage (16) sur le produit imprimé (12).

5. Appareil selon la revendication 4, **caractérisé par** une unité de commande (36) agissant sur le servo-entraînement (24, 32), qui commande les servo-entraîneraents (24, 32) de telle sorte que la tête de mesure (14) et l'unité d'éclairage (16) sont déplacées de façon intermittente sur des distances qui correspondent à la taille d'un champ d'image.

6. Appareil selon l'une quelconque des revendications 1 à 5, **caractérisé en ce que** la tête de mesure (14) est formée par un scanner essentiellement de type courant, qui est en outre pourvu du corps de diaphragme (74) entre son optique (72) et le convertisseur d'image (78) et dans lequel l'optique (72) et/ou l'unité d'éclairage (16) ont été déplacées de telle sorte que leurs axes ne répondent pas à la condition de réflexion.

7. Appareil selon l'une quelconque des revendications 1 à 6, **caractérisé en ce que** l'unité d'éclairage (16) produit un faisceau de lumière de mesure (52) incliné sous un petit angle d'environ 2° à environ 10° par rapport à la surface du produit imprimé (12) et atteignant le produit imprimé de façon rasante, et l'axe de l'optique (72) est essentiellement perpendiculaire à la surface du produit imprimé (12).

8. Appareil selon la revendication 7, **caractérisé en ce que** l'unité d'éclairage (16) comprend un miroir de déviation (58) voisin de la surface du produit imprimé (12).

9. Appareil selon l'une quelconque des revendications 1 à 8, **caractérisé en ce que** les faces du boîtier de la tête de mesure (14) et de l'unité d'éclairage (16) qui sont tournées vers la surface du produit imprimé (12) sont conçues comme surfaces absorbant la lumière de mesure.

10. Appareil selon l'une quelconque des revendications 6 à 9, **caractérisé en ce que** l'unité d'éclairage (16) présente un boîtier supplémentaire (44) posé sur le boîtier (68) du scanner.

11. Appareil selon la revendication 10, **caractérisé en ce que** le scanner est un scanner à main et le boîtier supplémentaire (44) présente des nervures de glissement (130) qui dépassent du dessous du boîtier du scanner vers le bas.

12. Appareil selon l'une quelconque des revendications 1 à 11, **caractérisé en ce que** l'unité d'évaluation (36) produit, à partir de l'image lue par le convertisseur d'image (78), une image de rugosités de surface par le fait qu'elle calcule pour la totalité de l'image ou pour une ligne d'image la luminosité moyenne de l'ensemble des pixels et qu'elle utilise pour l'image des rugosités les pixels dont la luminosité est inférieure à la luminosité moyenne.

13. Appareil selon la revendication 12, **caractérisé en ce que** l'unité d'évaluation (36) échange les zones sombres et claires de l'image de rugosité.

14. Appareil selon l'une quelconque des revendications 11 à 13, **caractérisé en ce que** l'unité d'évaluation (36) détermine pour chaque ligne de l'image les zones d'image claires et sombres ainsi que leur longueur.

15. Appareil selon la revendication 14, **caractérisé en ce que** l'unité d'évaluation (36) détermine si les zones d'image claires de lignes d'image successives se chevauchent et augmente un compteur de particules chaque fois de un si, dans la ligne d'image précédente, une zone d'image a été déterminée qui n'est plus présente dans la ligne d'image actuelle.

16. Appareil selon la revendication 14 ou 15, **caractérisé en ce que** l'unité d'évaluation (36), pour chaque zone d'image déterminée, pose une variable de taille de zone comme étant égale à la longueur de zone d'image déterminée dans la présente ligne d'image si cette longueur est supérieure à la variable de taille de zone.

17. Appareil selon l'une quelconque des revendications 1 à 16, **caractérisé en ce que** l'unité d'évaluation (36) produit un signal d'alarme (108) si la densité de poudre dans une région de la surface du produit imprimé (12) est inférieure à une valeur minimale spécifiée.

18. Appareil selon l'une quelconque des revendications 1 à 17, **caractérisé en ce que** l'unité d'évaluation (36) produit un signal d'alarme (108) si la densité de poudre dans une région de la surface du produit imprimé (12) est supérieure à une valeur maximale spécifiée.

19. Appareil selon l'une quelconque des revendications 1 à 18, **caractérisé en ce que** l'unité d'évaluation (36) présente une mémoire morte dans laquelle sont mémorisées, pour différentes valeurs de rugosité de supports d'impression, des valeurs de travail pour la taille de particules et la densité de poudre, et affiche un jeu de ces grandeurs de travail en fonction de la rugosité respectivement mesurée.

20. Appareil selon l'une quelconque des revendications 1 à 19, **caractérisé par** un dispositif pour régler l'angle d'incidence du faisceau de lumière de mesure.
